Europäisches Patentamt

European Patent Office

Office européen des brevets

(19)

(11) **EP 1 320 053 A2**

(12) **EUROPEAN PATENT APPLICATION**

(43) Date of publication:
**18.06.2003 Bulletin 2003/25**

(51) Int Cl.[7]: **G06F 17/60**, G06F 17/30

(21) Application number: **02010680.3**

(22) Date of filing: **13.05.2002**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI**<br><br>(30) Priority: **11.12.2001 JP 2001376577**<br><br>(71) Applicant: **Hitachi, Ltd.**<br>**Chiyoda-ku, Tokyo 101-8010 (JP)**<br><br>(72) Inventors:<br>• **Inaba, Yasuhiko, Hitachi, Ltd., Intellectual**<br>**Tokyo 100-8220 (JP)** | • **Tada, Katsumi, Hitachi, Ltd., Intellectual**<br>**Tokyo 100-8220 (JP)**<br>• **Sato, Yoshifumi, Hitachi, Ltd., Intellectual**<br>**Tokyo 100-8220 (JP)**<br>• **Matsubayashi,Tadataka, Hitachi, Ltd.,**<br>**Intellectual**<br>**Tokyo 100-8220 (JP)**<br>• **Uchikado, Makoto, Hitachi, Ltd., Intellectual**<br>**Tokyo 100-8220 (JP)**<br><br>(74) Representative: **Strehl Schübel-Hopf & Partner**<br>**Maximilianstrasse 54**<br>**80538 München (DE)** |

(54) **Information delivering service system**

(57)     A seed document (201) typifying document information delivery of which a user desires from user terminals (108) through a communication line (106) is registered to an information delivering service system (10). The system (10) extracts feature characters from the seed document and creates a user profile (202) for each user. Acquiring document information from an information delivering party (107), the system (10) extracts the feature characters from the document information and compares them with the feature characters of the user profile. The document information is transmitted to the user terminal to which the seed document having a relevance ratio exceeding a predetermined level is registered. Receiving the delivery of the document information, the user evaluates the document information as "relevant" or "irrelevant" and inputs the evaluation result to the system (10). The system (10) decides a delivery service fee to each user terminal by taking the evaluation from the user into account.

FIG. 1

**EP 1 320 053 A2**

**Description**

BACKGROUND OF THE INVENTION

This invention relates to an information delivering technology that delivers information coincident with delivery conditions registered by a plurality of users to the users corresponding to the delivery conditions.

Large quantities of information such as computerized documents and pictures (hereinafter simply called the "content") have been incessantly delivered to users in recent years through electronic mails or electronic news. Information sources that transmit information by utilizing WWW (World Wide Web) has been drastically increasing and the quantities of contents collected from these information sources by use of an information collection robot become also enormous. Therefore, needs have increased for an information delivering service that selects the information desired by users from among these contents and delivers them to the users.

JP-A-2000-339346 describes a document information delivering service system as an example of such an information delivering service. In the service system of this JP-A-2000-339346, each user inputs a sample document typifying the information to be delivered (hereinafter called the "seed document") as a retrieval condition to the system. The system calculates relevance of the seed document and the content of the document information by a predetermined calculation method and delivers only the document information having relevance higher than a predetermined value to the user.

JP-A-2000-078192 describes a fee charging system as a method of charging a fee in an information delivering service using the technology described above. This system charges the fee to the user in accordance with the number of contents delivered to the user.

However, this fee charging system is not yet free from the following problems.

According to the method that charges the fee to the user in accordance with the number of contents delivered, the user must pay the fee even when a large number of contents unnecessary for the user are delivered.

A method of charging a predetermined amount of fee to the user for a predetermined period irrespective of the quantity of the documents delivered and their contents may be conceivable, but the user must pay in this case a predetermined amount of fee even when no information is delivered at all for a certain period.

As described above, the conventional fee charging methods have not entirely been satisfactory to the users, and appropriate fee charging has not been made in some cases.

SUMMARY OF THE INVENTION

To solve the problems described above, it is therefore an object of the invention to provide an information delivering method capable of more reasonably charging a fee to users and an apparatus for the method.

Delivery conditions inputted by a plurality of users are stored in an information delivering service system. When document information is inputted to the information delivering service system, the system judges whether or not the document information is coincident with the delivery condition and delivers the document information to the user or users corresponding to the delivery condition that is found coincident. Receiving the document information thus delivered, the user inputs evaluation on the information so delivered to the information delivering service system. The information delivering service system calculates a fee to be charged to the user on the basis of this user's evaluation. Consequently, the fee can be calculated in accordance with the needs of the user.

Other objects, features and advantages of the invention will become apparent from the following description of the embodiments of the invention taken in conjunction with the accompanying drawings.

BRIEF DESCRIPTION OF THE DRAWINGS

Fig. 1 shows a construction of a first embodiment of this invention.
Fig. 2 shows an example of a user profile 112 generated by an information filtering program 109 in the first embodiment of the invention.
Fig. 3 is a PAD chart showing the flow of a process of a user evaluation management program 110 in the first embodiment of the invention.
Fig. 4 shows a correction example of the user profile 112 by the evaluation management program 110 in the first embodiment of the invention.
Fig. 5 shows an example of a delivery content number management table 113 and a calculation example of a fee to a user 118 in the first embodiment of the invention.
Fig. 6 shows another example of the delivery content number management table 113 and another calculation example of the fee to the user 118 in the first embodiment of the invention.

Fig. 7 shows an example of a delivery record management table 114 in the first embodiment of the invention.

Fig. 8 shows a setting example of a fee to a user in a second embodiment of the invention.

Fig. 9 shows a setting example of a fee to a user in a third embodiment of the invention.

Fig. 10 shows a setting example of a fee to a user in a fourth embodiment of the invention.

Fig. 11 shows a setting example of a user fee in a fifth embodiment of the invention.

Fig. 12 shows a setting example of a discount fee to a user in a sixth embodiment of the invention.

Fig. 13 shows an example of a display view for a user to input evaluation to delivered document information.

Fig. 14 shows a display view representing a fee calculation result by an information delivering service system and provided to a user in consideration of the evaluation inputted by the user.

DESCRIPTION OF THE EMBODIMENTS

The embodiments of the invention will be hereinafter described with reference to the accompanying drawings.

First, a first embodiment of the invention will be explained.

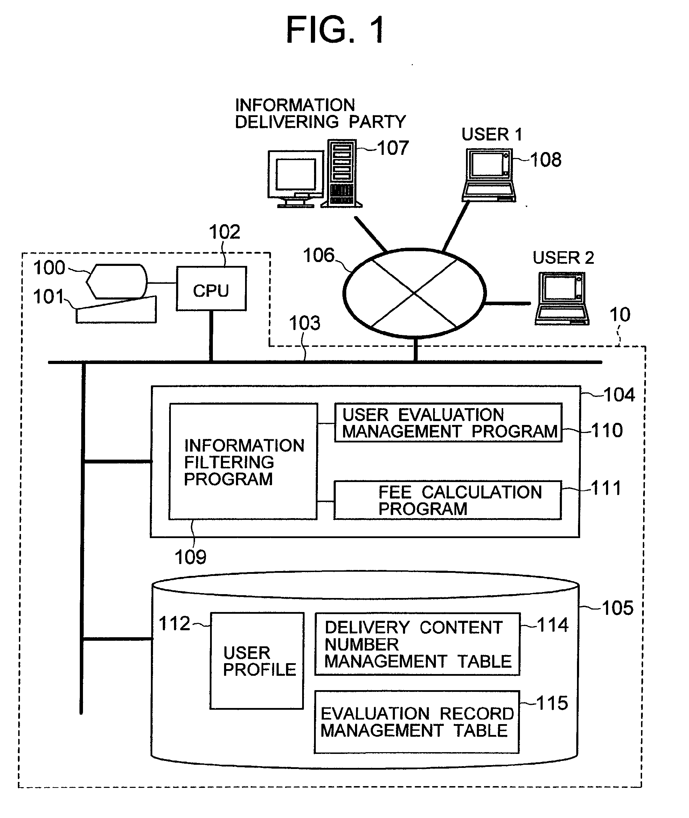

Fig. 1 shows a construction of an information delivering service provision system according to this embodiment. In this embodiment, computerized documents such as news will be explained as an example of contents to be delivered.

The information delivering service provision system 10 according to this embodiment includes a display 100, a keyboard 101, a central processing unit (CPU) 102, a memory 104, a magnetic disk device 105 and a bus 103 that connects these constituents.

A document information delivering party 107 for providing document information such as news to the information delivering service system 10 through a communication line 106 such as LAN (Local Area Network connected to user terminals (hereinafter simply called "users") 108 utilizing an information filtering system) is connected to the bus 103. The document information delivering party 107 delivers the computerized document information to the system 10 through electronic mail or through the Internet. The user registers a retrieval condition to the system 10 through the electronic mail. The system 10 delivers the document information retrieved on the basis of the retrieval condition to the user through the electronic mail.

Hereinafter, the explanation will be given on the assumption that the document information delivering party 107 delivers the document information to this system 10 through the electronic mail. However, the document information delivering party 107 may merely deliver the document information on the Internet so that the system 10 can collect the document information by use of an information collection robot. It will be further assumed hereby that in this system 10, the document information retrieved on the basis of the delivery condition is delivered to the users through the electronic mail. However, the system 10 may well provide the users with a table of the document information delivered through the Internet.

The memory 104 stores an information filtering program 109, a user evaluation management program 110 and a fee calculation program 111.

The magnetic disk device 105 is one of the secondary storage devices, and stores a user profile 112, a delivery content number management table 114 and an evaluation record management table 115.

These programs may be stored in a computer-readable storage medium such as a floppy disk or a CD-ROM.

The outline of the information filtering program 109 stored in the memory 104 will be explained. This program calculates relevance of the seed document inputted by the user 108 as the delivery condition by use of the technology described in JP-A-2000-339346, for example, and the document information received from the information delivering party 107 by a predetermined method. When relevance so calculated is higher than a predetermined threshold value, the program 109 delivers the document information to the user 108 as satisfying the delivery condition stipulated by the user 108. The user 108 may send and register the seed document to the system 10 through the Internet or the electronic mail.

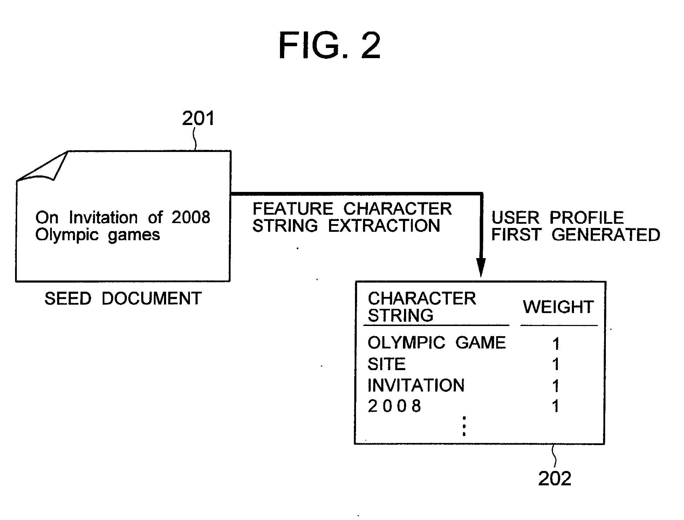

Next, an example of this processing will be explained with reference to Fig. 2.

First, it will be assumed that the user 108 inputs a seed document 201 reading "On Invitation of 2008 Olympic Games". At this time, the character string distinctively represents the content of this seed document 201 (hereinafter called "feature character string") is extracted and is written with its weight to the user profile 202. The user profile 202 is the data that is generated for each user registered, and represents the content of the document information that the user "desires to be delivered". The weight is a value that is used for calculating relevance. A higher weight is applied to the feature character string representing the content the user more strongly desires. For instance, the number of times of appearance of the feature character string in the seed document is used as the weight. The method disclosed in JP-A-11-143902 may be used as the method of extracting the feature character string, or a method that extracts words in each document by morphological analysis may also be used.

Next, relevance of this user profile 202 and the document information is calculated by a predetermined method.

When relevance is higher than a predetermined threshold value, this document information is delivered to the user 108. An example of the relevance calculation method is given below:

$$\begin{aligned}&\text{(relevance of certain document information to}\\&\text{user profile)} = \text{(weight of feature character}\\&\text{string 1)} \times \text{(number of times of appearance of}\\&\text{feature character string 1 in document}\\&\text{information)} + \text{(weight of feature character}\\&\text{string 2)} \times \text{(number of times of appearance of}\\&\text{feature character string 2 in document}\\&\text{information)} + \hspace{4cm} \text{(Eq. 1)}\end{aligned}$$

Other formulas may be used for calculating this relevance.

The above explains the information filtering program 109.

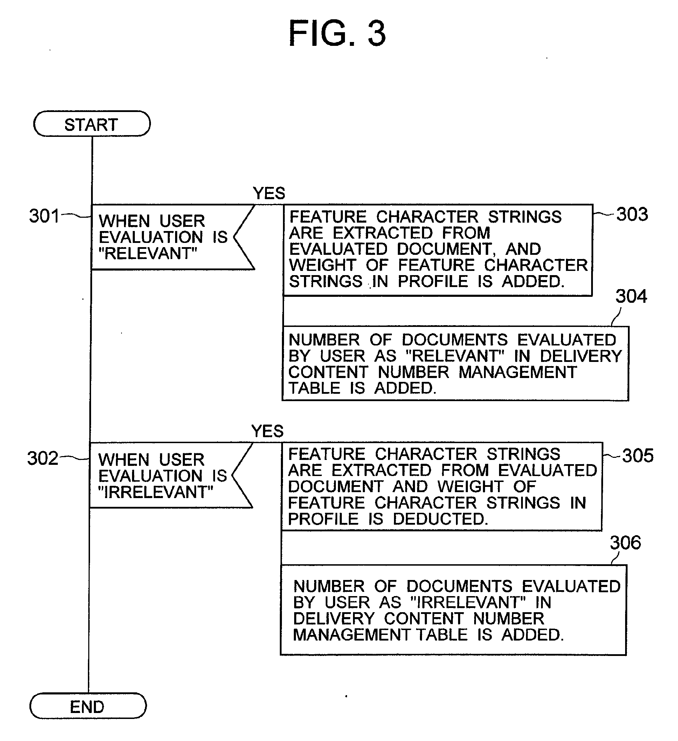

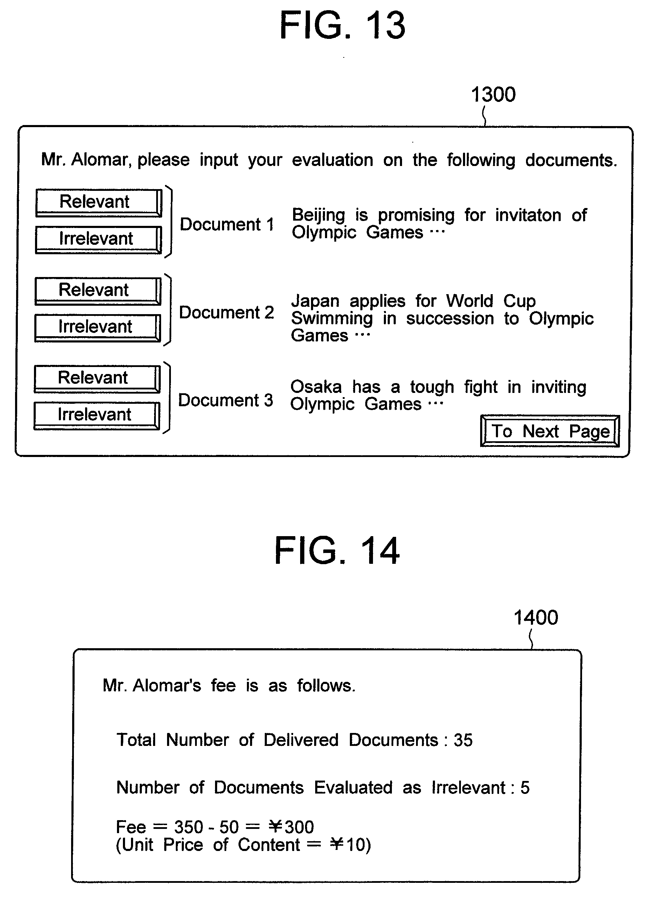

Next, the processing content of the user evaluation management program 110 will be explained with reference to PAD diagram (Problem Analysis Diagram) in Fig. 3. This program is activated by the information filtering program 109 when the user 108 inputs evaluation on the delivered information to the system 10. The user 108 may register this evaluation to the system 10 from a display screen 1300 shown in Fig. 13 through the Internet or through the electronic mail.

In first Step 301, the user evaluation management program 110 executes the process of Steps 303 and 304 when the evaluation from the user 108 is "relevant". In Step 303, the user evaluation management program 110 extracts the feature character string from the document evaluated by the user 108 and adds the weight of the feature character strings in the user profile 112. In Step 304, this program 110 adds the number of documents evaluated by the user as "relevant" in the delivery content number management table 114.

When the evaluation by the user 108 is "irrelevant" in Step 302, the user evaluation management program 110 executes the processes in Steps 305 and 306. In Step 305, the program 110 extracts the feature character strings from the document evaluated by the user 108 and deducts the weight of this feature character string from the weight in the user profile 112. In Step 306, the program 110 adds the number of documents evaluated as "irrelevant" by the user in the delivery content number management table 114.

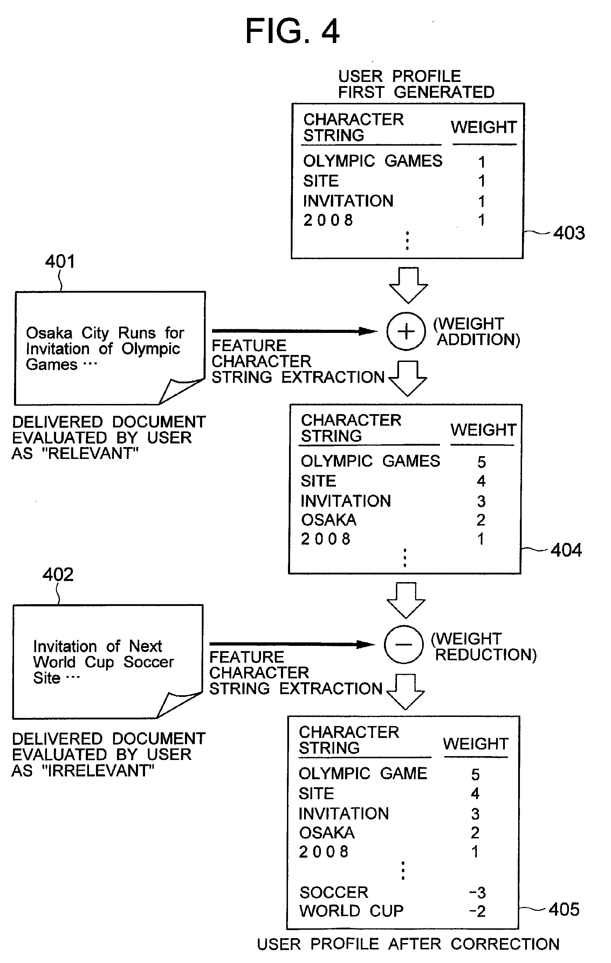

A correction example of the user profile 112 by the Steps 303 and 305 described above will be explained in detail with reference to Fig. 4.

It will be assumed that document information 401 reading "Osaka City Runs for Invitation of Olympic Games" and document information 402 reading "Invitation of Next World Cup Soccer" are calculated as having high relevance to the user profile 403 and are delivered to the user 108 as shown in this drawing. It will be further assumed that the user 108 is interested in "Invitation of Olympic Games" but not in "Invitation of World Cup Soccer". In this case, the user 108 evaluates the document information 401 as "relevant" and the document information 402 as "irrelevant". At this time, Step 303 in Fig. 3 adds the weight of the feature character string extracted from the document information 401 evaluated as "relevant" in the user profile. On the contrary, Step 305 in Fig. 3 deducts the weight of the feature character string extracted from the document information 402 evaluated as "irrelevant" in the user profile. A negative weight is applied to character strings that do not exist in the user profile. This processing creates the user profile 405 after correction. Since the weight of the character strings in the user profile 405 such as "Soccer" and the "World Cup" are negative, relevance of the document information in which these character strings appear becomes low, and these document information are not delivered to the user 108.

As described above, evaluation of the user 108 is used to correct the user profile 112 of the user 108.

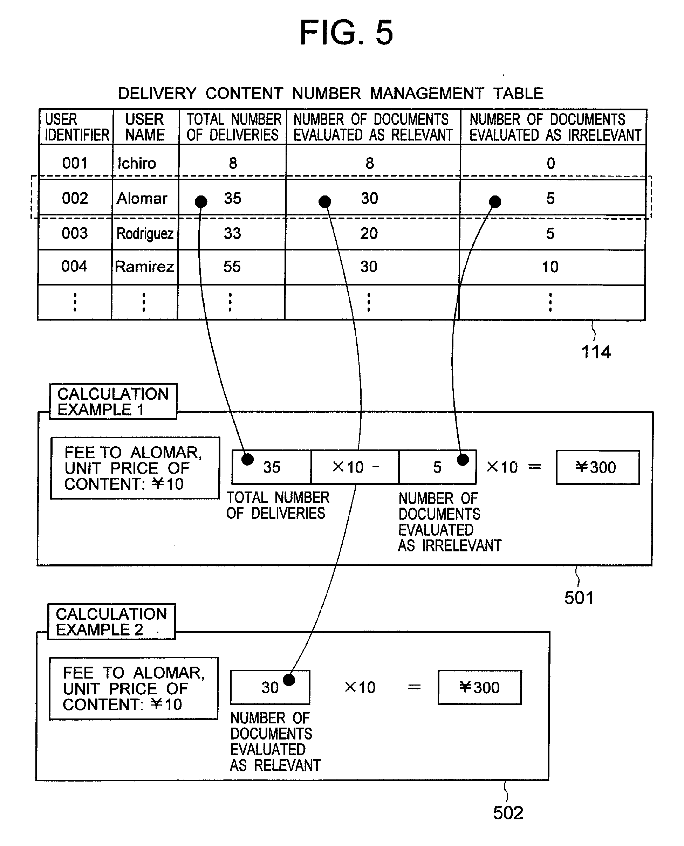

On the other hand, Fig. 5 shows an example of the content of the delivery content number management table 114 corrected by Steps 504 and 506.

As shown in the drawing, the delivery content number management table 114 stores an identifier of each user 108, a user name, a total number of contents delivered to the user, the number of documents evaluated as "relevant" and the number of documents evaluated as "irrelevant". In the example shown in Fig. 5, eight document information are delivered to the user "Ichiro" having a user identifier "001", and the user "Ichiro" evaluates all of the eight document information as "relevant". Thirty-five document information are delivered to a user "Alomar" having a user identifier "002", and the user "Alomar" evaluates thirty of them as "relevant" and five as "irrelevant".

When the user evaluates the document information as "relevant", Step 304 explained with reference to Fig. 3 increments the "number of documents evaluated as relevant" by the user in the delivery content number management table 114. When the user evaluates the document information as "irrelevant", on the contrary, Step 306 explained in Fig. 3 increments the "number of documents evaluated as irrelevant" by the user.

Alternatively, when the user does not evaluate certain document information as "relevant", it may be possible to regard the document information as "irrelevant" for the user and to execute Steps 505 and 506. The above explains the user evaluation management program 110.

Next, the processing content of the fee calculation program 111 will be explained.

It will be assumed that this fee calculation program 111 is activated at a predetermined timing, for example, once a month. The fee charged to each user is calculated by referring to the delivery content number management table 114. It is possible to set the activation timing by describing the timing to a system definition file or by setting it by a command or by other methods. The following formula is used to calculate the fee:

$$\text{(user fee)} = \text{(number of documents delivered to}$$

$$\text{user)} \times \text{(unit price)} - \text{(number of documents}$$

$$\text{evaluated by user as "irrelevant")} \times \text{(unit price)} \quad \text{(Eq. 2)}$$

Alternatively,

$$\text{(user fee)} = \text{(basic fee)} - \text{(number of documents}$$

$$\text{evaluated by user as "irrelevant")} \times \text{(unit price)} \quad \text{(Eq. 3)}$$

When the user fee is calculated by the calculation formula described above, the user 108 can pay the fee in accordance with the number of document information the user really desires. When the user inputs false evaluation of "irrelevant" on the desired document information so as to illegally reduce the fee, the user evaluation management program 110 corrects the user profile 112 as has already been explained. Therefore, the document information the user desires is not delivered from next time on. In other words, this system can prevent false evaluation by the users, too.

Here, the following formula may also be used to calculate the fee:

$$\text{(user fee)} = \text{(number of documents evaluated by}$$

$$\text{user as "relevant")} \times \text{(unit prices)} \quad \text{(Eq. 4)}$$

This is a payment system in which the user pays the fee for only the documents the user evaluates as "relevant". In this case, the user does not possibly evaluate the desired information as "relevant" to avoid the payment of the user fee. To prevent such a fraud when the desired information is not evaluated as "relevant", correction similar to the one used when the document information is evaluated as "irrelevant" may be added to the user profile.

Other fee calculation formulas may also be employed as long as they take the "number of documents evaluated as relevant" and the "number of documents evaluated as irrelevant" into consideration.

An example of the fee calculation by the fee calculation program 111 will be explained with reference to Fig. 5. In the example shown in Fig. 5, thirty-five document information are delivered to the user "Alomar" having the user identifier "002", and the user "Alomar" evaluates thirty of them as "relevant" and five as "irrelevant". When the unit price is ¥10 in this case, the fee is calculated as follows in accordance with Equation 5 in the calculation example 1:

$$\text{(fee of user "Alomar")} = 35 \text{ (number of documents}$$

$$\text{delivered to user)} \times 10 \text{ (unit price)} - 5 \text{ (number}$$

$$\text{of document evaluated by user as "irrelevant")} \times$$

$$10 \text{ (unit price)} = ¥300 \qquad \text{(Eq. 5)}$$

The fee thus calculated is displayed on the user terminal 108 as the display screen 1400 shown in Fig. 14 through the Internet, for example.

On the other hand, in the calculation example 2 shown in Fig. 5, the fee is calculated as follows in accordance with Equation 6:

$$\text{(fee of user "Alomar")} = 30 \text{ (number of document}$$

$$\text{evaluated by user as "relevant")} \times 10 \text{ (unit price)}$$

$$= ¥300 \qquad \text{(Eq. 6)}$$

When the document information the user does not want is delivered and the communication fee for delivering the document information is added to the fee to the user, the communication fee may be deducted. For example, the communication fee required for delivering the document information the user evaluates as "irrelevant" is deducted from the fee calculated in accordance with Equation 5.

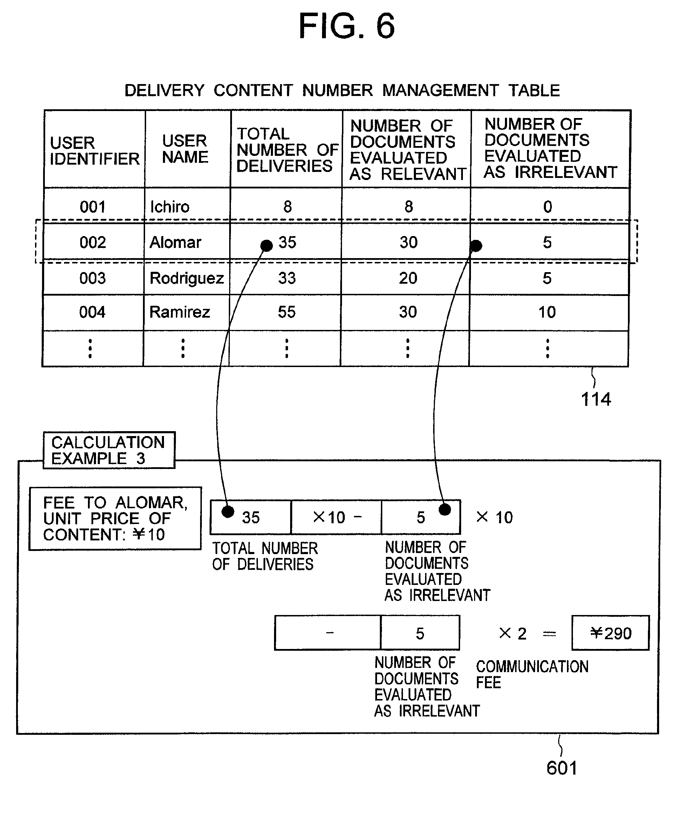

This example will be explained with reference to Fig. 6. The delivery content number management table 113 shown in Fig. 6 is the same as the one explained with reference to Fig. 5. In this case, the calculation example 3 of the fee to the user "Alomar" is as follows:

$$\text{(fee to user "Alomar")} = 35 \text{ (number of documents}$$

$$\text{delivered to user)} \times 10 \text{ (unit price)} - 5 \text{ (number}$$

$$\text{of documents evaluated as "irrelevant")} \times 10 \text{ (unit}$$

$$\text{price)} - 5 \text{ (number of documents evaluated by user}$$

$$\text{as irrelevant)} \times 2 \text{ (communication fee per}$$

$$\text{document)} = ¥ 290 \qquad \text{(Eq. 7)}$$

When evaluation is inputted a plurality of times on the same document information, an appropriate fee may not be calculated. For example, forgetting that the user evaluated in the past a certain document information as relevant, the user again evaluates the same document as "relevant" from the display screen 1300 shown in Fig. 13, or the user repeatedly evaluates the same document as "irrelevant" so as to reduce the fee.

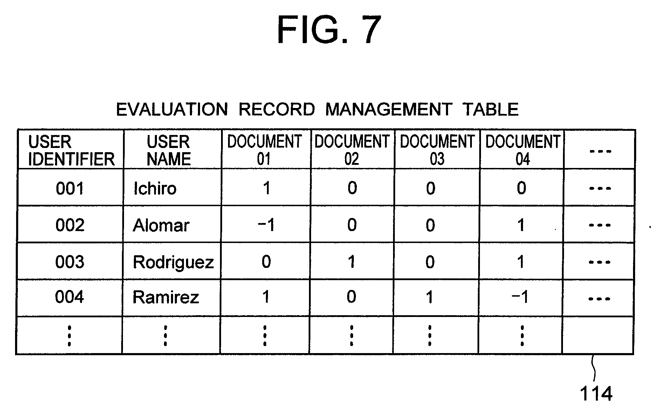

To prevent such a problem, the evaluation record management table 114 shown in Fig. 7 is generated, and is updated whenever the user profile 112 is corrected on the basis of the evaluation from the user 108. The evaluation record management table 114 stores a user identifier for each user 108, a user name and a numerical value representing the evaluation that the user gives to each document. The numerical value representing the evaluation is "1" for "relevant" and "-1" for "irrelevant". In the example shown in Fig. 7, the user "Alomar" having the identification number "002" evaluates the document information having an identifier "document 01" as "irrelevant" and the document information of an identifier "document 04" as "relevant".

This table is looked up whenever the user 108 inputs the evaluation on the document information. When the user "Ichiro" again inputs his evaluation on the document of the identifier "01", a message "You have already evaluated the document as "relevant" is displayed on the screen so as not to activate the user evaluation management program 110. In this way, it is possible to check the activation of the user evaluation management program 110.

The above explains the fee calculation program 111. In a practical fee collection method, it is possible to employ a system in which a third party may exist, such as a method that requires a payment request to a designated account (not shown in the drawing) of each user in a financial institution or a method that urges the user to pay the fee to the teller's window (not shown) of the institution designated by the service provision party. When a telephone company conducts the information delivering service, the company may collect the utilization fee as the telephone fee. In this way, the utilization fee can be calculated while taking into consideration whether or not the content delivered is advantageous for the user. The above explains the first embodiment of the invention.

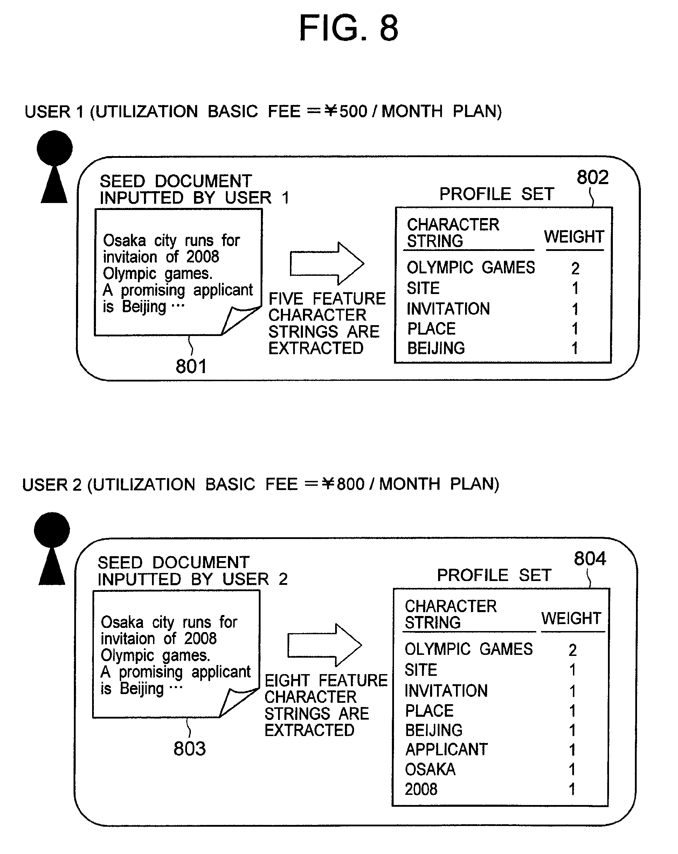

Next, the second embodiment of the invention will be explained. This embodiment accomplishes collection of the utilization fee in accordance with the capacity of the delivery condition that is set by each user. This embodiment uses the same system construction as that of the first embodiment but the fee calculation program 111 calculates a utilization basic fee as the fee of each user that will be hereinafter explained with reference to Fig. 8.

Fig. 8 assumes the case where two users 1 and 2 select setting (hereinafter called "plans") of mutually different basic utilization fees and utilize the service. First, it is also assumed that the user 1 sets a plan of ¥500/month as the utilization basic fee. In this case, only five feature character strings are extracted from the seed document 801 set by the user 1 and are written to the profile 802 of the user 1.

It will be further assumed, on the other hand, that the user 2 sets a plan of ¥800/month as the utilization basic fee. In this case, eight feature character strings are extracted from the seed document 803 set by the user 2 and are written to the profile 804 of the user 2. In other words, the user paying a greater amount of utilization basic fee can utilize a profile having a greater capacity so that the contents more appropriate for the user's object can be delivered.

Because the fees are set as described above, resources for storing the profile can be saved in the system 10 for the users selecting the lower basic utilization fee and a greater amount of basic utilization fee can be collected from the users who desire the delivery of a greater profile capacity and more detailed contents. In other words, the utilization fee can be set in accordance with the capacity of the delivery condition for each user. In this example, setting of the fee has been explained about the capacity of the profile for storing the character strings for judging the delivery condition. Generally, however, the delivery condition has a specification such that it can be retrieved when a logical condition, a proximity condition, etc, are designated. The fee can be set in accordance with the number and the kind of such logical and proximity conditions. The fee can also be set in accordance with the length of a retrieval formula. Though two kinds of the plans of the basic utilization fees have been explained in this embodiment, a greater number of plans may of course be set in accordance with the capacity of the delivery condition.

The above explains the second embodiment of the invention.

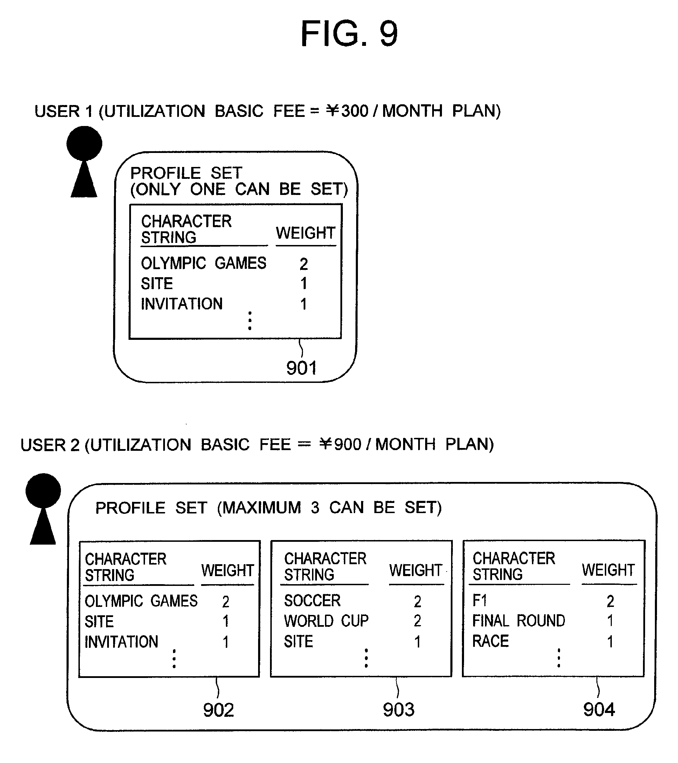

Next, the third embodiment of the invention will be explained. This embodiment solves the problem that an appropriate setting method of a utilization fee in accordance with the number of delivery conditions set by the user does not exist. This embodiment employs the same system construction as that of the first embodiment but the fee calculation program 111 calculates a utilization basic fee as the fee of each user that will be explained hereinafter with reference to Fig. 9.

Fig. 9 shows a case where two users 1 and 2 select mutually different utilization plans and utilize the service. It will be assumed first that the user 1 sets a plan of ¥300/month as the utilization basic fee. In this case, the user 1 can input only one seed document as the delivery condition. Therefore, the user can set only one profile 901.

It will be also assumed, on the other hand, that the user 2 sets a plan of ¥900/month as the utilization basic fee. In this case, the user 2 can input three seed documents as the delivery condition and can eventually set three profiles 902, 903 and 904.

When such fee setting is employed, the utilization fee can be appropriately set in accordance with the number of the delivery conditions for each user so that a greater amount of the basic utilization fee can be collected from users who need a greater amount of contents to be delivered and to set a greater profile.

In this embodiment, the number of profiles that can be set is determined in accordance with the basic utilization fee plan the user selects in advance. However, the basic utilization fee may also be added whenever the user sets a new profile. Though only two kinds of the basic utilization fee plans are explained in this embodiment, a greater number of kinds of plans may be set, too.

The above explains the third embodiment of the invention.

Next, the fourth embodiment of the invention will be explained. This embodiment solves the problem that an appropriate setting method of a utilization fee in accordance with the delivery frequency of the contents required by the user does not exist.

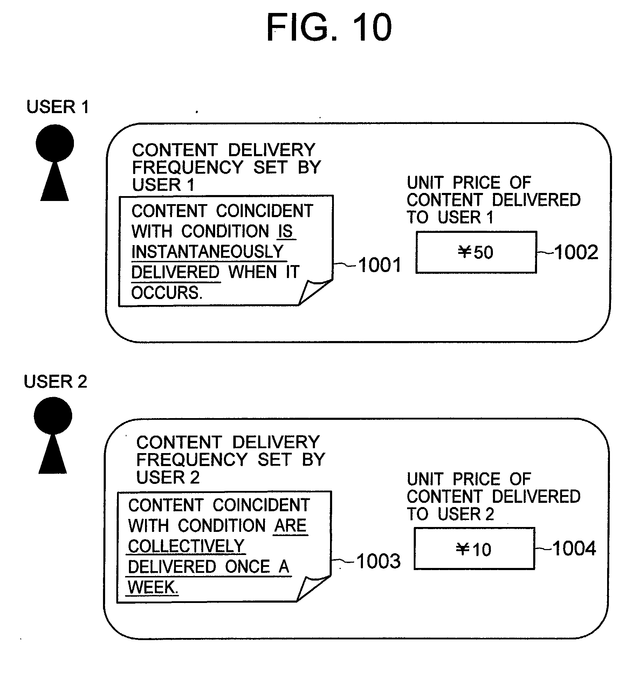

This embodiment employs the same system construction as that of the first embodiment but the fee calculation program 111 calculates a utilization fee of each user by using the unit price, as the unit price of the content explained in the first embodiment, that will be explained hereinafter with reference to Fig. 10.

Fig. 10 shows a case where the users 1 and 2 select different delivery frequencies and utilize the service. It will be assumed first that the user 1 selects setting 1001 "When the content coincident with the delivery condition set by the user 1 occurs, the content is instantaneously delivered". In this case, ¥50 is charged as the unit price 1002 per content to the user 1.

It will be assumed, on the other hand, that the user 2 selects setting 1003 "The contents coincident with the delivery condition set by the user 2 are collectively delivered once a week". In this case, ¥10 is charged as the unit price 1004 per content to the user 2.

When such fee setting is employed, the utilization fee can be appropriately set in accordance with the delivery frequency of the contents required by the users in such a fashion that a greater amount of fee is charged to the user to which the contents must be delivered with higher frequency to instantaneously acquire a greater quantity of information.

This embodiment changes the unit price of the content in accordance with the delivery frequency required by the user. However, the basic utilization fee may be changed, too, as explained in the second and third embodiments. This embodiment sets only two kinds of delivery frequencies, but a greater number of kinds of delivery frequencies may be set.

The above explains the fourth embodiment of the invention.

The fifth embodiment of the invention will be explained. In an information delivering service equipped with a relevance feedback function, this embodiment solves the problem that an appropriate setting method of a utilization fee in accordance with a correction processing amount of a profile does not exist, by feeding back user's evaluation.

This embodiment employs the same system construction as that of the first embodiment but the fee calculation program 111 uses the following utilization fee calculation formula:

$$\text{(user fee)} = \text{(number of documents delivered to}$$

$$\text{user)} \times \text{(unit price)} + \text{(number of documents}$$

$$\text{evaluated by user)} \times \text{(unit price)} \quad \text{(Eq. 8)}$$

This calculation formula makes it possible to collect not only the fee in accordance with the content delivered but also the profile correction fee in accordance with the evaluation of the user on the content.

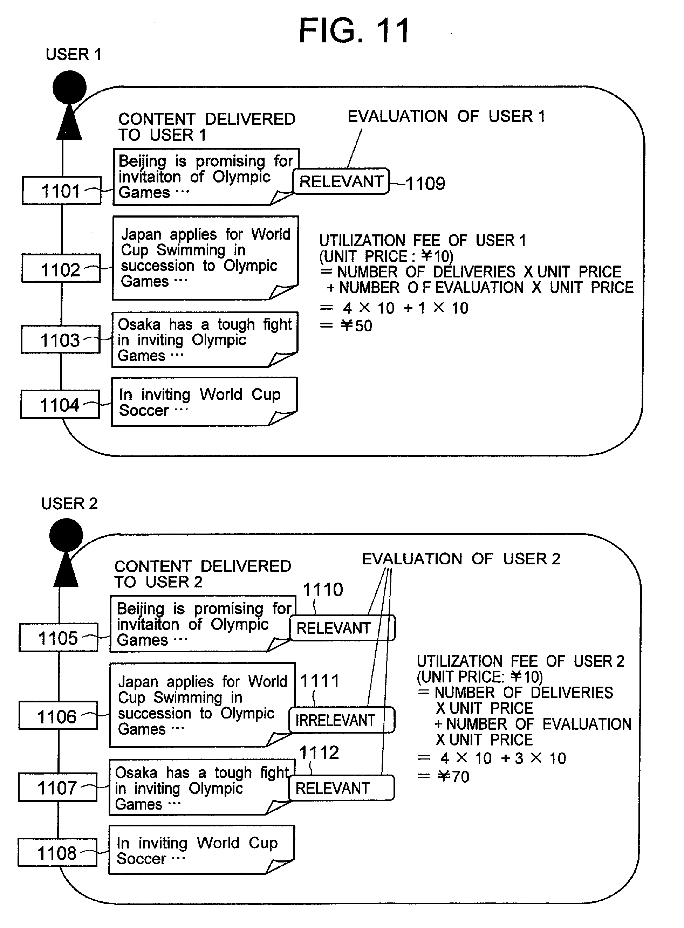

This embodiment will be explained with reference to Fig. 11. Fig. 11 shows an example where two users 1 and 2 utilize the information delivering service and respectively receive four kinds of document information. It will be assumed that the user 1 inputs the evaluation "relevant" on only document information 1101 among the document information 1101, 1102, 1103 and 1104 delivered and the content of the profile of the user 1 is corrected. At this time, the utilization fee program 111 calculates the utilization fee of the user 1 in accordance with the calculation formula described above:

$$\text{(utilization fee of user 1)} = 4 \text{ (number of}$$

$$\text{documents delivered to user)} \times 10 \text{ (unit price)} + 1$$

$$\text{(number of documents evaluated)} \times 10 \text{ (unit price)}$$

$$= \yen 50 \quad \text{(Eq. 9)}$$

It will be assumed, on the other hand, that the user 2 inputs the evaluation "relevant", "irrelevant" and "relevant" on three document information 1101, 1102 and 1103, respectively, among the four document information 1101, 1102, 1103 and 1104 and the content of the profile of the user 2 is corrected. At this time, the fee calculation program 111 calculates the utilization fee of the user 2 in accordance with the calculation formula given above:

$$4 \text{ (number of documents delivered to user)} \times 10$$

$$\text{(unit price)} + 3 \text{ (number of documents evaluated)} \times$$

$$10 \text{ (unit price)} = \yen 70 \quad \text{(Eq. 10)}$$

When such fee setting is employed, the utilization fee in accordance with the correction processing amount of the profile can be appropriately set in such a fashion that a greater amount of fee can be charged to the user conducting a greater amount of profile correction processing, by feeding back the user's evaluation.

The above explains the fifth embodiment of the invention.

Next, the sixth embodiment of the invention will be explained. This embodiment solves the problem that a reduction method of the utilization fee does not exist when information unnecessary for the user is delivered.

This embodiment employs the same system construction as that of the first embodiment but the fee calculation program 111 deducts the fee from the utilization fee charged to the user in accordance with the following calculation formula:

$$\text{(user discount fee)} = \text{(relevance of document 1}$$

$$\text{evaluated by user as "irrelevant")} \times \text{(unit price)}$$

$$+ \text{(relevance of document 2 evaluated by user as}$$

$$\text{"irrelevant")} \times \text{(unit price)} + \qquad \text{(Eq. 12)}$$

According to this calculation formula, the system 10 calculates high relevance (using for example percentage) for the document irrelevant to the user, and deducts the utilization fee to the user. In other words, when the delivery condition irrelevant to the intention of the user is set, the utilization fee can be deducted in consideration of the degree of irrelevance.

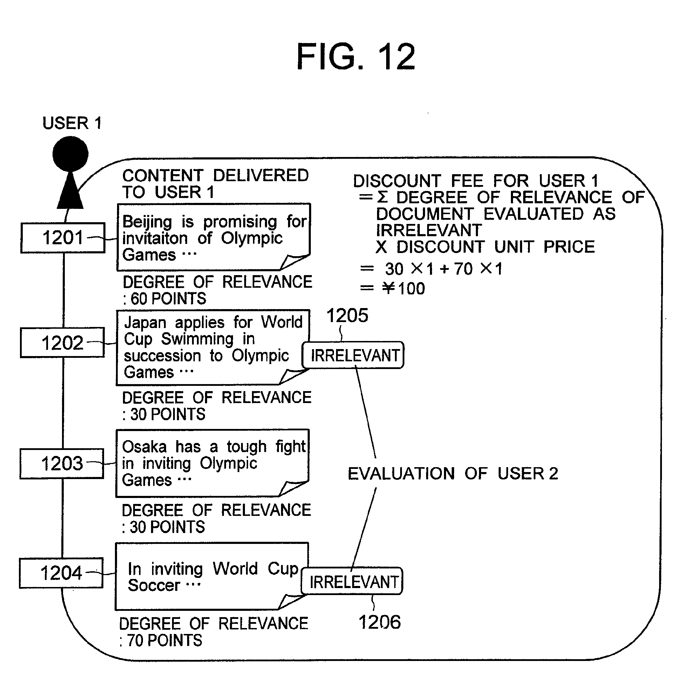

This embodiment will be explained with reference to Fig. 12. The drawing shows a case where four kinds of document information 1201, 1202, 1203 and 1204 are delivered to the user 1. In this instance, the system 10 calculates relevance of the document information and displays it on the user terminal screen. It will be assumed in this case that the user 1 gives evaluation "irrelevant" to the document information 1202 and 1204. Then, the fee calculation program 111 calculates the discount amount for the user 1 in the following way:

$$\text{(discount amount of user 1)} = 30 \text{ (relevance}$$

$$\text{calculated for document information 1202}$$

$$\text{evaluated by user as "irrelevant")} \times 10 \text{ (unit}$$

$$\text{price)} + 70 \text{ (relevance calculated for document}$$

$$\text{information 1204 evaluated by user as}$$

$$\text{"irrelevant")} \times 10 \text{ (unit price)} = ¥100 \qquad \text{(Eq. 13)}$$

When this fee setting is employed, a greater amount is deducted from the utilization fee of the user when higher relevance is calculated in the content irrelevant to the user. In other words, when the delivery condition that is irrelevant to the intention of the user is set, the fee can be deducted by taking the degree of irrelevance from the intention is taken into account.

The above explains the sixth embodiment of the invention.

The foregoing embodiments respectively explain the independent fee calculation methods, but they may be combined in providing the service.

Examples of the content delivered by the information delivering service include pictures and music, and they are contained in some cases in the document information. In such a case, similarity of attribute information such as comments or keywords associated with these pictures and music to the user profile is calculated so as to judge whether or not they are delivered to each user. A technology for calculating similarity among these contents such as similarity among the pictures or among music, that is, similarity among the contents, is also known, and similarity so calculated can be utilized, too.

It should be further understood by those skilled in the art that the foregoing description has been made on embodiments of the invention and that various changes and modifications may be made in the invention without departing from the spirit of the invention and the scope of the appended claims.

**Claims**

1. An information delivering service system (10) comprising the steps of:

   inputting a seed document (201) typifying document information each user desires delivery from a plurality of user terminals (108) through a communication line (106);
   extracting feature characters from said seed document and creating a user profile (202) for each user;
   extracting said feature characters from said document information when said document information is acquired from an information delivering party (107) and comparing said feature characters with said feature characters of said user profile;

delivering said document information to said user terminal inputting said seed document having a relevance ratio above a predetermined ratio through said communication line as a result of comparison;

inputting evaluation of the user corresponding to said user terminal as to "relevance" or "irrelevance" of said document information from said user terminal receiving the delivery of said document information through said communication line; and

changing a delivery service fee to the terminal user inputting said evaluation in consideration of said evaluation.

2. An information delivering service system (10) according to claim 1, wherein weighting of said feature characters coincident with said feature characters of said document information in said user profile for the user inputting said evaluation is increased in accordance with evaluation of said document information as "relevant".

3. An information delivering service system (10) according to claim 1, wherein weighting of said feature characters coincident with said feature characters of said document information in said user profile for the user inputting said evaluation is decreased in accordance with evaluation of said document information as "irrelevant".

4. An information delivering service system (10) according to claim 1, wherein said feature characters not coincident with said feature characters of said document information in said user profile for the user inputting said evaluation among said feature characters of said document information are added to said user profile with a negative weight in accordance with evaluation of said document information as "irrelevant".

5. An information delivering service system (10) according to claim 1, wherein the fee is not applied to the delivered information said user does not desire the delivery and evaluates as "irrelevant".

6. An information delivering service system (10) according to claim 1, wherein the fee is deducted for the delivered information said user does not desire the delivery and evaluates as "irrelevant".

7. An information delivering service system (10) according to claim 1, wherein the fee is calculated in accordance with the number of delivered information said user desires the delivery and evaluates as "relevant".

8. An information delivering service method comprising the steps of:

holding a delivery condition (202) inputted from terminals (108) of a plurality of users for each user;

judging whether or not document information is coincident with said delivery condition when said document information is acquired;

delivering information relating to said inputted document information to a user terminal corresponding to said coincident delivery condition;

inputting user's evaluation receiving the delivery on said information delivered; and

calculating a fee to said user on the basis of evaluation of said user.

9. An information delivering service method according to claim 8, wherein said user's evaluation on said delivered information is as to whether or not said user desires said delivered information, and the fee is not charged for said delivered information evaluated as being not desired in said fee calculation.

10. An information delivering service method according to claim 8, wherein said user's evaluation on said delivered information is as to whether or not said user desires said delivered information, and the fee is deducted for said delivered information evaluated as being not desired in said fee calculation.

11. An information delivering service method according to claim 8, wherein said user's evaluation on said delivered information is as to whether or not said user desires said delivered information, and the fee is calculated in accordance with the number of said delivered information evaluated as being desired in said fee calculation.

12. An information delivering service method comprising the steps of:

holding a delivery condition (202) inputted from terminals (108) of a plurality of users for each user;

judging whether or not document information is coincident with said delivery condition when said document information is acquired;

delivering information relating to said inputted document information to a user terminal corresponding to said coincident delivery condition; and

calculating a fee to said user on the basis of a degree of complexity of said delivery condition of said user.

**13.** An information delivering service method according to claim 12, wherein the fee to said user is calculated in accordance with the number of keywords in said delivery condition of said user.

**14.** An information delivering service method comprising the steps of:

holding a delivery condition (202) inputted from terminals (108) of a plurality of users for each user;
judging whether or not document information is coincident with said delivery condition when said document information is acquired;
delivering information relating to said inputted document information to a user terminal corresponding to said coincident delivery condition; and
calculating a fee to said user on the basis of the number of delivery conditions per user when said user has a plurality of delivery conditions.

**15.** An information delivering service apparatus comprising:

storage means (105) for storing a delivery condition (202) inputted from terminals (108) of a plurality of users for each user;
delivery means for judging whether or not document information is coincident with said delivery condition when said document information is acquired, and delivering information relating to said inputted document information to a user terminal corresponding to said coincident delivery condition; and
fee calculation means for inputting evaluation of said user receiving the delivery on said information delivered, and calculating a fee to be charged to said user on the basis of said evaluation of said user.

**16.** An information delivering program comprising the steps of:

holding a delivery condition (202) inputted from terminals (108) of a plurality of users for each user;
judging whether or not document information is coincident with said delivery condition when said document information is acquired, and delivering information relating to said inputted document information to a user terminal corresponding to said coincident delivery condition; and
inputting evaluation of said user receiving the delivery on said information delivered, and calculating a fee to be charged to said user on the basis of said evaluation of said user.

**17.** A computer-readable storage medium storing therein an information delivering program, said program comprising the steps of:

holding a delivery condition (202) inputted from terminals (108) of a plurality of users for each user;
judging whether or not document information is coincident with said delivery condition when said document information is acquired, and delivering information relating to said inputted document information to a user terminal corresponding to said coincident delivery condition; and
inputting evaluation of said user receiving the delivery on said information delivered, and calculating a fee to be charged to said user on the basis of said evaluation of said user.

**18.** An information delivering system comprising:

storage means (105) for storing a delivery condition (202) inputted from terminals (108) of a plurality of users for each user;
delivery means for judging whether or not document information is coincident with said delivery condition when said document information is acquired, and delivering information relating to said inputted document information to a user terminal corresponding to said coincident delivery condition; and
fee calculation means for inputting evaluation of said user receiving the delivery on said information delivered from said user terminal, and calculating a fee to be charged to said user on the basis of said evaluation of said user.

# FIG. 1

INFORMATION DELIVERING PARTY

107

USER 1

108

102

100

101

CPU

106

103

USER 2

10

INFORMATION FILTERING PROGRAM

104

USER EVALUATION MANAGEMENT PROGRAM

110

FEE CALCULATION PROGRAM

111

109

USER PROFILE

112

DELIVERY CONTENT NUMBER MANAGEMENT TABLE

114

105

EVALUATION RECORD MANAGEMENT TABLE

115

# FIG. 2

201

On Invitation of 2008
Olympic games

SEED DOCUMENT

FEATURE CHARACTER
STRING EXTRACTION

USER PROFILE
FIRST GENERATED

| CHARACTER STRING | WEIGHT |
|---|---|
| OLYMPIC GAME | 1 |
| SITE | 1 |
| INVITATION | 1 |
| 2008 | 1 |
| ⋮ | |

202

# FIG. 3

START

301 — WHEN USER EVALUATION IS "RELEVANT" | YES → 303 — FEATURE CHARACTER STRINGS ARE EXTRACTED FROM EVALUATED DOCUMENT, AND WEIGHT OF FEATURE CHARACTER STRINGS IN PROFILE IS ADDED.

304 — NUMBER OF DOCUMENTS EVALUATED BY USER AS "RELEVANT" IN DELIVERY CONTENT NUMBER MANAGEMENT TABLE IS ADDED.

302 — WHEN USER EVALUATION IS "IRRELEVANT" | YES → 305 — FEATURE CHARACTER STRINGS ARE EXTRACTED FROM EVALUATED DOCUMENT AND WEIGHT OF FEATURE CHARACTER STRINGS IN PROFILE IS DEDUCTED.

306 — NUMBER OF DOCUMENTS EVALUATED BY USER AS "IRRELEVANT" IN DELIVERY CONTENT NUMBER MANAGEMENT TABLE IS ADDED.

END

# FIG. 4

USER PROFILE
FIRST GENERATED

| CHARACTER STRING | WEIGHT |
|---|---|
| OLYMPIC GAMES | 1 |
| SITE | 1 |
| INVITATION | 1 |
| 2008 | 1 |
| ⋮ | |

403

401

Osaka City Runs for
Invitation of Olympic
Games …

DELIVERED DOCUMENT
EVALUATED BY USER
AS "RELEVANT"

FEATURE
CHARACTER
STRING EXTRACTION

(+) (WEIGHT ADDITION)

| CHARACTER STRING | WEIGHT |
|---|---|
| OLYMPIC GAMES | 5 |
| SITE | 4 |
| INVITATION | 3 |
| OSAKA | 2 |
| 2008 | 1 |
| ⋮ | |

404

402

Invitation of Next
World Cup Soccer
Site …

DELIVERED DOCUMENT
EVALUATED BY USER
AS "IRRELEVANT"

FEATURE
CHARACTER
STRING EXTRACTION

(−) (WEIGHT REDUCTION)

| CHARACTER STRING | WEIGHT |
|---|---|
| OLYMPIC GAME | 5 |
| SITE | 4 |
| INVITATION | 3 |
| OSAKA | 2 |
| 2008 | 1 |
| ⋮ | |
| SOCCER | -3 |
| WORLD CUP | -2 |

405

USER PROFILE AFTER CORRECTION

# FIG. 5

DELIVERY CONTENT NUMBER MANAGEMENT TABLE

| USER IDENTIFIER | USER NAME | TOTAL NUMBER OF DELIVERIES | NUMBER OF DOCUMENTS EVALUATED AS RELEVANT | NUMBER OF DOCUMENTS EVALUATED AS IRRELEVANT |
|---|---|---|---|---|
| 001 | Ichiro | 8 | 8 | 0 |
| 002 | Alomar | ● 35 | ● 30 | ● 5 |
| 003 | Rodriguez | 33 | 20 | 5 |
| 004 | Ramirez | 55 | 30 | 10 |
| ⋮ | ⋮ | ⋮ | ⋮ | ⋮ |

114

CALCULATION EXAMPLE 1

FEE TO ALOMAR, UNIT PRICE OF CONTENT: ¥10

| ● 35 | ×10 − | 5 ● | ×10 = | ¥300 |

TOTAL NUMBER OF DELIVERIES

NUMBER OF DOCUMENTS EVALUATED AS IRRELEVANT

501

CALCULATION EXAMPLE 2

FEE TO ALOMAR, UNIT PRICE OF CONTENT: ¥10

| 30 ● | ×10 | = | ¥300 |

NUMBER OF DOCUMENTS EVALUATED AS RELEVANT

502

16

# FIG. 6

DELIVERY CONTENT NUMBER MANAGEMENT TABLE

| USER IDENTIFIER | USER NAME | TOTAL NUMBER OF DELIVERIES | NUMBER OF DOCUMENTS EVALUATED AS RELEVANT | NUMBER OF DOCUMENTS EVALUATED AS IRRELEVANT |
|---|---|---|---|---|
| 001 | Ichiro | 8 | 8 | 0 |
| 002 | Alomar | 35 | 30 | 5 |
| 003 | Rodriguez | 33 | 20 | 5 |
| 004 | Ramirez | 55 | 30 | 10 |
| ⋮ | ⋮ | ⋮ | ⋮ | ⋮ |

114

CALCULATION EXAMPLE 3

FEE TO ALOMAR, UNIT PRICE OF CONTENT: ¥10

| 35 | ×10 − | 5 | × 10 |

TOTAL NUMBER OF DELIVERIES

NUMBER OF DOCUMENTS EVALUATED AS IRRELEVANT

| − | 5 | × 2 = | ¥290 |

NUMBER OF DOCUMENTS EVALUATED AS IRRELEVANT

COMMUNICATION FEE

601

17

# FIG. 7

EVALUATION  RECORD  MANAGEMENT  TABLE

| USER IDENTIFIER | USER NAME | DOCUMENT 01 | DOCUMENT 02 | DOCUMENT 03 | DOCUMENT 04 | --- |
|---|---|---|---|---|---|---|
| 001 | Ichiro | 1 | 0 | 0 | 0 | --- |
| 002 | Alomar | −1 | 0 | 0 | 1 | --- |
| 003 | Rodriguez | 0 | 1 | 0 | 1 | --- |
| 004 | Ramirez | 1 | 0 | 1 | −1 | --- |
| ⋮ | ⋮ | ⋮ | ⋮ | ⋮ | ⋮ | |

114

# FIG. 8

USER 1 (UTILIZATION BASIC FEE = ¥500 / MONTH PLAN)

SEED DOCUMENT INPUTTED BY USER 1

Osaka city runs for invitaion of 2008 Olympic games.
A promising applicant is Beijing …

801

FIVE FEATURE CHARACTER STRINGS ARE EXTRACTED

PROFILE SET    802

| CHARACTER STRING | WEIGHT |
|---|---|
| OLYMPIC GAMES | 2 |
| SITE | 1 |
| INVITATION | 1 |
| PLACE | 1 |
| BEIJING | 1 |

USER 2 (UTILIZATION BASIC FEE = ¥800 / MONTH PLAN)

SEED DOCUMENT INPUTTED BY USER 2

Osaka city runs for invitaion of 2008 Olympic games.
A promising applicant is Beijing …

803

EIGHT FEATURE CHARACTER STRINGS ARE EXTRACTED

PROFILE SET    804

| CHARACTER STRING | WEIGHT |
|---|---|
| OLYMPIC GAMES | 2 |
| SITE | 1 |
| INVITATION | 1 |
| PLACE | 1 |
| BEIJING | 1 |
| APPLICANT | 1 |
| OSAKA | 1 |
| 2008 | 1 |

# FIG. 9

USER 1 (UTILIZATION BASIC FEE = ￥300 / MONTH PLAN)

PROFILE SET
(ONLY ONE CAN BE SET)

| CHARACTER STRING | WEIGHT |
|---|---|
| OLYMPIC GAMES | 2 |
| SITE | 1 |
| INVITATION | 1 |
| ⋮ | |

901

USER 2 (UTILIZATION BASIC FEE = ￥900 / MONTH PLAN)

PROFILE SET (MAXIMUM 3 CAN BE SET)

| CHARACTER STRING | WEIGHT |
|---|---|
| OLYMPIC GAMES | 2 |
| SITE | 1 |
| INVITATION | 1 |
| ⋮ | |

902

| CHARACTER STRING | WEIGHT |
|---|---|
| SOCCER | 2 |
| WORLD CUP | 2 |
| SITE | 1 |
| ⋮ | |

903

| CHARACTER STRING | WEIGHT |
|---|---|
| F1 | 2 |
| FINAL ROUND | 1 |
| RACE | 1 |
| ⋮ | |

904

# FIG. 10

USER 1

CONTENT DELIVERY FREQUENCY SET BY USER 1

CONTENT COINCIDENT WITH CONDITION <u>IS INSTANTANEOUSLY DELIVERED</u> WHEN IT OCCURS. ~1001

UNIT PRICE OF CONTENT DELIVERED TO USER 1

¥50 ~1002

USER 2

CONTENT DELIVERY FREQUENCY SET BY USER 2

CONTENT COINCIDENT WITH CONDITION <u>ARE COLLECTIVELY DELIVERED ONCE A WEEK.</u> ~1003

UNIT PRICE OF CONTENT DELIVERED TO USER 2

¥10 ~1004

# FIG. 11

USER 1

CONTENT DELIVERED TO USER 1

EVALUATION OF USER 1

1101 — Beijing is promising for invitaiton of Olympic Games ⋯ | RELEVANT ~1109

1102 — Japan applies for World Cup Swimming in succession to Olympic Games ⋯

UTILIZATION FEE OF USER 1 (UNIT PRICE : ¥10)
= NUMBER OF DELIVERIES X UNIT PRICE + NUMBER O F EVALUATION X UNIT PRICE
= 4 X 10 + 1 X 10
= ¥50

1103 — Osaka has a tough fight in inviting Olympic Games ⋯

1104 — In inviting World Cup Soccer ⋯

USER 2

CONTENT DELIVERED TO USER 2

EVALUATION OF USER 2

1110

1105 — Beijing is promising for invitaiton of Olympic Games ⋯ | RELEVANT

1111

1106 — Japan applies for World Cup Swimming in succession to Olympic Games ⋯ | IRRELEVANT

UTILIZATION FEE OF USER 2 (UNIT PRICE: ¥10)
= NUMBER OF DELIVERIES X UNIT PRICE + NUMBER OF EVALUATION X UNIT PRICE
= 4 X 10 + 3 X 10
= ¥70

1112

1107 — Osaka has a tough fight in inviting Olympic Games ⋯ | RELEVANT

1108 — In inviting World Cup Soccer ⋯

# FIG. 12

USER 1

CONTENT DELIVERED TO USER 1

1201 — Beijing is promising for invitaiton of Olympic Games ...

DEGREE OF RELEVANCE : 60 POINTS

1202 — Japan applies for World Cup Swimming in succession to Olympic Games ...

DEGREE OF RELEVANCE : 30 POINTS

1203 — Osaka has a tough fight in inviting Olympic Games ...

DEGREE OF RELEVANCE : 30 POINTS

1204 — In inviting World Cup Soccer ...

DEGREE OF RELEVANCE : 70 POINTS

DISCOUNT FEE FOR USER 1
$= \Sigma$ DEGREE OF RELEVANCE OF DOCUMENT EVALUATED AS IRRELEVANT
X DISCOUNT UNIT PRICE
$= 30 \times 1 + 70 \times 1$
$= $¥100

1205

IRRELEVANT

EVALUATION OF USER 2

IRRELEVANT

1206

# FIG. 13

1300

Mr. Alomar, please input your evaluation on the following documents.

| Relevant |
| Irrelevant |

Document 1    Beijing is promising for invitaton of Olympic Games ···

| Relevant |
| Irrelevant |

Document 2    Japan applies for World Cup Swimming in succession to Olympic Games ···

| Relevant |
| Irrelevant |

Document 3    Osaka has a tough fight in inviting Olympic Games ···

To Next Page

# FIG. 14

1400

Mr. Alomar's fee is as follows.

Total Number of Delivered Documents : 35

Number of Documents Evaluated as Irrelevant : 5

Fee = 350 - 50 = ¥300
(Unit Price of Content = ¥10)